(19) · Europäisches Patentamt

European Patent Office

Office européen des brevets

(11) Veröffentlichungsnummer: **0 051 248**
**B1**

(12) EUROPÄISCHE PATENTSCHRIFT

(45) Veröffentlichungstag der Patentschrift:
18.07.84

(51) Int. Cl.³: **G 03 B 17/32**

(21) Anmeldenummer: 81108961.4

(22) Anmeldetag: 27.10.81

(54) **Planfilmkassette.**

(30) Priorität: 30.10.80 DE 3040819

(43) Veröffentlichungstag der Anmeldung:
12.05.82 Patentblatt 82/19

(45) Bekanntmachung des Hinweises auf die Patenterteilung:
18.07.84 Patentblatt 84/29

(84) Benannte Vertragsstaaten:
AT BE CH FR GB IT LI NL

(56) Entgegenhaltungen:
DE - B - 2 750 559
FR - A - 2 334 983
US - A - 562 168
US - A - 1 933 823
US - A - 2 526 840

(73) Patentinhaber: AGFA-GEVAERT Aktiengesellschaft,
D-5090 Leverkusen 1 (DE)

(72) Erfinder: Bauer, Walter, Heinrich-Wieland-Strasse 178,
D-8000 München 90 (DE)
Erfinder: Färber, Heinrich, Dietlindenstrasse 9,
D-8000 München 40 (DE)
Erfinder: Müller, Jürgen, Bozzarisstrasse 7,
D-8000 München 90 (DE)

## Beschreibung

Die Erfindung betrifft eine Planfilmkassette mit einem Aufnahmeteil, das einen festen Boden zur Aufnahme eines Planfilms aufweist, mit einem daran schwenkbar über ein an einer Seite vorgesehenes Scharnier angelenkten und an der gegenüberliegenden Seite verriegelbaren Deckelteil, das ein Belichtungsfenster und einen stirnseitigen Schlitz, in dem eine einen Film in der Kassette lichtdicht abdeckende Lichtschutzplatte verschiebbar ist, aufweist, mit Lichtabdichtungen zwischen Aufnahmeteil und Deckelteil.

Planfilmkassetten ähnlicher Art laufen auch unter dem Begriff CRT-Kassetten und finden in Planfilmkameras, hauptsächlich aber in Mehrformatkameras Anwendung, in welchen die Bilder hochauflösender Bildschirme in unterschiedlichen Formaten auf dem Filmblatt abgebildet werden. Dabei kann entweder die ganze Filmfläche für ein Einzelbild verwendet oder aber mit mehreren Einzelbildern (bis 25 und mehr Bildern) belegt werden. Dabei können auch unterschiedliche Formate gleichzeitig aufbelichtet werden. Solche Mehrformatkameras finden hauptsächlich in der medizinischen Diagnostik ihre Anwendung.

Die bei Mehrformatkameras zum Einsatz kommenden Planfilmkassetten werden gewöhnlich so eingelegt, daß das Belichtungsfenster nach unten weist, so daß nach Aufziehen der Lichtschutzplatte der Film von unten her belichtet wird. Eine Planfilmkassette der eingangs genannten Art ist beispielsweise aus der DE-B2 2 750 559 bekannt. Dabei wird das Planhalten des Filmes durch eine bewegliche Druckplatte erreicht, welche mittels Federstreifen oder Federfingern gegen das Belichtungsfenster gedrückt wird, wobei die Federelemente mittels Kurvenfolgeorganen betätigt werden. Dabei hat es sich als nachteilig erwiesen, daß insbesondere bei großen Filmformaten bei nach unten gerichteten Kassetten der Film in der Mitte nach unten durchhängt, so daß die Aufnahmen unscharf werden. Dies ist die Folge von einem unterschiedlichen Andruckverhalten der Druckplatte an dem Rahmen des Belichtungsfensters, wodurch Luft zwischen Film und Druckplatte eindringen kann, welche das Durchhängen des Filmes ermöglicht.

Des weiteren ist diese bekannte Kassette ausschließlich für eine automatische Be- und Entladung vorgesehen. Zu diesem Zweck ist eine äußerst komplizierte Einrichtung notwendig, welche zum einen das Andruckverhältnis der Druckplatte löst, zum anderen eine Klappe an der Eintrittsöffnung aufschwenkt, wonach mit weiteren Mitteln der Film aus dem schmalen Schlitz entnommen und ein neuer Film in diesen Schlitz wieder eingegeben werden muß. Eine solche Einrichtung ist aufwendig und die Eingabe in den schmalen Schlitz kompliziert.

Andererseits ist durch die US-A-2 628 545 eine Planfilmkassette ähnlicher Art, jedoch für Filmpacks bekanntgeworden. Bei Einführung der einzelnen, in Hüllen angeordneten Filmblätter muß diese Kassette bereits an einer Kamera in Belichtungsposition sein, wobei die Lichtschutzplatte der Kassette völlig entnommen ist und die einzelnen Filmblätter zunächst in der Hülle durch den stirnseitigen Schlitz für die Lichtschutzplatte eingeführt und durch einen in Verbindung mit einer über dem Boden des Aufnahmeteiles liegenden Filmandruckplatte gebildeten Kanal auf diese gelegt und gegen das offene Belichtungsfenster gedrückt werden. Die Belichtung erfolgt nach Abziehen der Hülle durch den stirnseitigen Schlitz und Betätigung des Kameraverschlusses. Will man nach der Belichtung eines oder mehrer Planfilme die Kassette von der Kamera abnehmen, so wird statt eines weiteren Planfilmes die Lichtschutzplatte in den stirnseitigen Schlitz und vor die Belichtungsöffnung geschoben. Nach Verbringen der Kassette in die Dunkelkammer wird dann der Deckel zum Entnehmen des belichteten Filmpacks geöffnet.

Diese bekannte Filmpackkassette ist ebenfalls nur sehr umständlich zu handhaben, weil immer nur ein Filmblatt nach dem anderen bei Tageslicht in die Kassette eingeführt und belichtet werden muß und das Einführen durch den schmalen, nur nach Entfernung der Lichtschutzplatte vorhandenen stirnseitigen Schlitz umständlich ist. Andererseits wäre ein Beladen der Kassette durch den für die Entladung zu öffnenden Deckelteil wegen der dabei hochschwenkenden Filmandruckplatte nur mit großer Geschicklichkeit möglich. Diese Kassette ist für eine automatische Be- und Entladung nicht und für eine Be- und Entladung von Hand wenig geeignet. Auch die Planlage des Films in dieser Kassette ist unzureichend, weil die Andruckplatte kürzer als das Belichtungsfenster ist und der Film nicht längs seiner gesamten Ränder gegen eine ebene Auflage gedrückt wird. Des weiteren ist auch eine exakte Filmlage relativ zu sämtlichen Belichtungsfensterrändern kaum zu erreichen.

Ähnliche Planfilmkassetten sind auch durch die US-A-562 168 oder die US-A-1 933 823 bekanntgeworden. Bei diesen hier beschriebenen Kassetten sind wiederum entweder eine Andruckplatte zum Drücken des Films oder Filmpacks gegen das Belichtungsfenster und/oder stirnseitige Schlitze zum Einführen und/oder Entnehmen des Films oder seiner Lichtschutzhülle bei geschlossenem Deckelteil und geschlossener Lichtschutzplatte vorhanden, so daß eine präzise Lage des Films in der Kassette nicht gewährleistet und die Handhabung kompliziert ist.

Eine Kassette nach dem Gattungsbegriff ist schließlich durch die DE-A- 2 655 462 bekanntgeworden. Sie dient zur Herstellung von Sofortbild-Aufnahmen nach dem Zweiblattverfahren und weist ebenfalls stirnseitige Schlitze zum Abziehen von Papierhüllen bzw. Einführen des zweiten Blattes bzw. Entnehmen des Filmpacks sowie beschriebene und nicht gezeigte Lichtabdichtungen für diese und die Längsränder von Aufnahme- und Deckelteil auf. Dabei liegt das Aufnahme-Filmblatt am flachen Boden des Aufnahmeteils irgendwie zwischen zwei hochstehenden Längsrändern, zwischen die auch ein wegen der Aufnahme der Lichtschutzplatte dickerer Teil des Deckels eingreift und dabei eine Art Labyrint bilden soll. Nachdem die Lichtabdichtungen an den Längsrändern als allenfalls umgekehrt L-förmiges Labyrinth ausgebildet ist und diese Teile den Planfilm nicht in jeder Richtung genau festlegen, sind bei dieser bekannten Kassette Lichtabdichtung und Filmlage nicht befriedigend.

Der Erfindung liegt daher die Aufgabe zugrunde, eine Planfilmkassette der eingangs genannten Art derart weiterzubilden, daß deren Handhabung vereinfacht ist und insbesondere das Be- und Entladen auf einfache Weise durch den geöffneten Deckelteil möglich und außerdem die Lage des Planfilms in der Kassette und dabei auch die Ausrichtung zum Belichtungsfenster und die Lichtsicherheit verbessert sind.

Diese Aufgabe wird erfindungsgemäß gelöst durch die Merkmale des Hauptanspruchs. Weitere vorteilhafte Merkmale der Erfindung sind den Unteransprüchen entnehmbar.

Durch das Wegfallen einer Filmandruckplatte, die den Film u. U. nur teilweise und ungleichmäßig gegen das Belichtungsfenster drücken würde, und das Niederhalten des Films auf den planen festen Boden des Aufnahmeteiles mittels des rundum laufenden Rahmens des Deckelteiles ist nicht nur das Einlegen des Filmblattes bei geöffnetem Deckelteil einfach und unkompliziert, sondern es wird auch die Qualität einer Aufnahme verbessert, weil das Filmblatt längs aller seiner Ränder bzw. längs der Ränder der Belichtungsöffnung auf den festen Boden gedrückt wird und daher beim Einlegen plan ausgerichtet wird. Selbst wenn die Kassette mit dem Belichtungsfenster nach unten (wobei das Deckelteil das Unterteil und das Aufnahmeteil das Oberteil würde) verwendet werden muß, kann der Film infolge seiner an allen seinen Rändern erfolgenden Halterung beim Einlegen in die Kassette nicht zum Belichtungsfenster hin oder in dieses hinein durchhängen. Außerdem behält die Lichtschutzplatte beim Filmeinlegen und/oder -entnehmen ihre geschlossene Stellung im Deckelteil, weil ein bei den bekannten Kassetten notwendiger Schlitz zum Einführen des Filmblattes bzw. Abziehen einer Filmblatteinhüllung nicht mehr erforderlich und gar nicht mehr erwünscht ist. Dadurch ist es auch möglich, daß das Aufnahmeteil einen rechteckigen Rahmen für das Filmblatt aufweist, der dessen Lage fixiert und als Labyrinthteil wirken kann. Durch die außerhalb der rechteckigen Rahmen an der der Schubseite für die Lichtschutzplatte, an der ohnehin Dichtungen irgendwelcher Art üblich sind, benachbarten bzw. gegenüberliegenden Kassetenseiten vorgesehenen Labyrinthteile ist außerdem die Lichtsicherheit wesentlich verbessert.

In einer Ausgestaltung der Erfindung wird die bessere Handhabung der eingangs erwähnten Planfilmkassette auch dadurch noch verbessert, daß die Lichtschutzplatte nur durch Knopfdruck aus dem Oberteil der Kassette herausgezogen werden kann. Damit wird vermieden, daß beim Herabfallen der Kassette die Platte aus dem Oberteil zumindest zum Teil herausrutschen kann.

In einer weiteren Ausgestaltung der Erfindung wird an der Lichtschutzplatte eine Einstellmöglichkeit vorgesehen, welche anzeigt, ob der in der Kassette befindliche Film bereits belichtet worden ist und die ferner ein irrtümliches zweites Herausziehen der Platte verhindert.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigt

Fig. 1 eine perspektivische Ansicht durch eine erfindungsgemäße Planfilmkassette;

Fig. 2 einen Querschnitt II-II durch die in Fig. 1 dargestellten Planfilmkassette;

Fig. 3 einen ersten Längsschnitt III-III durch die in Fig. 1 dargestellte Kassette;

Fig. 4a und 4b einen zweiten Längsschnitt IV-IV der in Fig. 1 dargestellten Kassette; und

Fig. 5 eine perspektivische Unteransicht der Kassette nach Fig. 1.

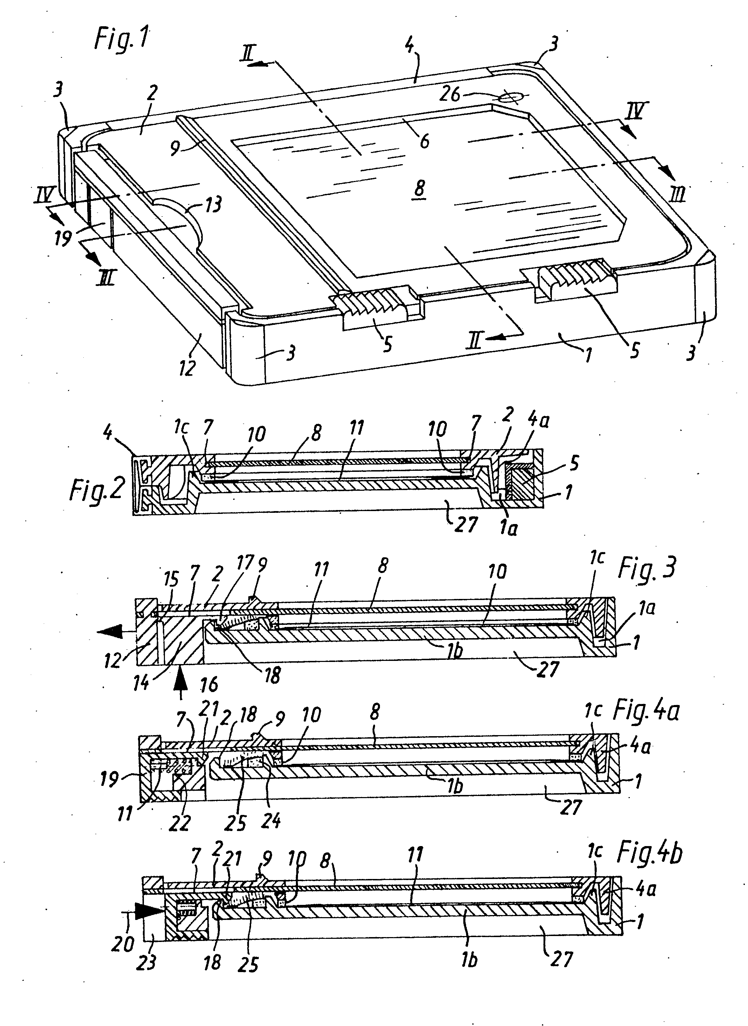

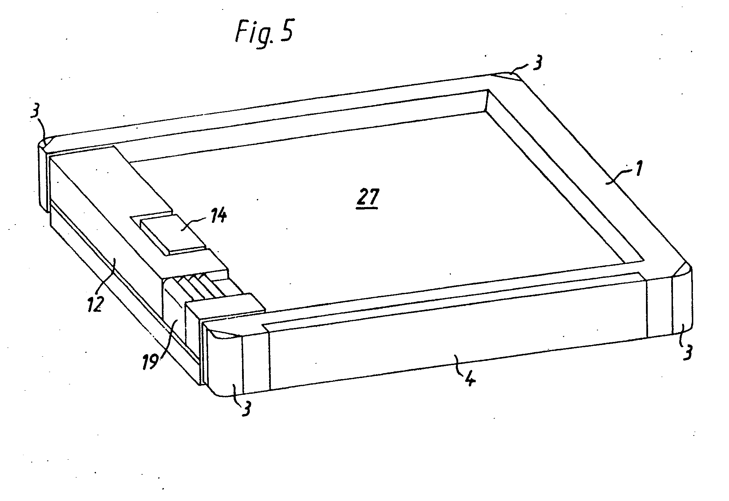

In den Fig. 1 bis 5 ist mit 1 ein Unterteil oder Kassettenboden und mit 2 ein Oberteil oder Kassettendeckel bezeichnet. Das Unterteil 1 weist einen dreiseitigen, stabilen Rahmen auf, in welchem eine Labyrinthvertiefung 1a ausgeformt ist. Die Höhe des Rahmens entspricht etwa der gesamten Kassettendicke und an den vier Ecken des Rahmens sind elastische Formteile 3 angebracht. Das Oberteil 2 ist mittels eines flexiblen Scharniers 4 an einer Längsseite an dem Unterteil 1 angelenkt und ragt mit einem Vorsprung 4a in die Labyrinthvertiefung 1a des Unterteils. Gegenüber dem Scharnier 4 sind in dem Unterteil Verriegelungselemente 5 vorgesehen, welche mit an dem Deckel ausgeformten, nicht dargestellten Zapfen zusammenwirken.

In dem Oberteil 2 ist eine größere, das Belichtungsfenster darstellende Aussparung 6 vorgesehen sowie ein Schlitz 7 ausgeformt, in welchen eine Lichtschutzplatte 8 eingeschoben werden kann. Der Schlitz 7 befindet sich an der hinsichtlich des Rahmens offenen Seite des Unterteils 1, wie ebenfalls eine Dichtleiste 9 an der Außenfläche des Oberteils 2. An der zum Unterteil 1 weisenden Innenfläche des Oberteils 2 ist ein rundumlaufender, das Belichtungsfenster umgrenzender elastischer Rahmen 10 angebracht, vorzugsweise aus Schaumstoff, welcher bei geschlossener Kassette auf ein flaches Bodenteil 1b des Unterteils 1 drückt. An dem Boden 1b des Unterteils 1 ist demgegenüber ein rechteckiger Rahmen 1c ausgeformt, welcher zum einen eine schräg zur Mitte verlaufende Innenfläche aufweist, welche eine Fläche gleich der Größe eines Filmes 11 begrenzt, und zum anderen den elastischen Rahmen 10 am Oberteil 2 umgibt. Das bedeutet, daß der feste Rahmen 1c am Boden 1b des Unterteils 1 den Film 11 genau positioniert und der elastische Rahmen 10 am Oberteil 2 auf dem Rand des Filmes 11 zu liegen kommt und diesen an den Boden 1b drückt. Durch die schräge Annäherung des Oberteils 2 an das Unterteil und den rundum geschlossenen elastischen Rahmen 10 wird vermieden, daß zwischen Boden 1b und Film 11 Luft eindringen kann, so daß der Film auch bei nach unten gerichteter Kassette in einem flachen Andruckverhältnis an dem Kassettenboden 1b verbleibt.

An der Einschubseite der Lichtschutzplatte 8 ist an dieser eine Griffleiste 12 angebracht, welche aufgrund einer Aussparung 13 im Oberteil 2 leicht zu fassen ist. Wie aus Fig. 3 hervorgeht, ist an der Innenseite der Griffleiste 12 unterhalb der Lichtschutzplatte 8 ein Druckknopf 14 angebracht, der nur über einen schmalen Steg 15 mit der Griffleiste 12 in Verbindung steht. Damit ergibt sich für den Druckknopf 14 eine federnde Bewegungsmöglichkeit in Richtung des Pfeiles 16. An dem Druckknopf 14 ist ein Haken 17 ausgeformt, der mit einer am Unterteil 1 ausgeformten Hakenleiste 18 zusammenwirkt. Dies bedeutet, daß mit dem Einschieben der Lichtschutzplatte 8 der Haken 17 an der Hakenleiste 18 des Bodenteils einrastet und nur mit Eindrücken des Druckknopfes 14 aus der Einraststellung gebracht werden kann. Damit wird unter anderem auch ein irrtümliches Ziehen an der Griffleiste 12 und damit ein Belichten des eingelegten Filmes 11 verhindert.

An der Griffleiste 12 ist außerdem eine Schieberraste 19 vorgesehen, welche am besten aus den Fig. 4a und 4b zu erkennen ist. Die Schieberraste 19 besteht im wesentlichen aus einem U-förmigen Bügel, welcher in der Griffleiste 12 für eine Verschiebung in Pfeilrichtung 20 geführt ist. An dem U-förmigen Bügel ist ein Haken 21 ausgeformt, der ebenfalls mit der Hakenleiste 18 am Unterteil 1 zusammenwirkt. Eine zwischen Griffleiste 12 und U-förmigem Bügel wirkende Druckfeder 22 hält diesen in der in den Fig. 1, 4a und 5 dargestellten Stellung. Beim Eindrücken der Schieberraste 19 bleibt diese mit ihrem Haken 21 hinter der Hakenleiste 18 hängen und kann nur durch das Öffnen der Kassette wieder entrasten. Denn nur dabei wird die Griffleiste 12 und damit der Haken 21 aus dem Eingriff mit der Leiste 18 gebracht. Dies hat den Vorteil, daß nach einer Belichtung, zu welcher die Raste 19 von der Bedienungsperson gedrückt werden soll, die Lichtschutzplatte 8 nicht noch ein zweites Mal zu einer weiteren Belichtung herausgezogen werden kann. Außerdem dient die eingedrückte Taste 19 zur Anzeige der bereits erfolgten Belichtung. Die Anzeige kann dadurch verdeutlicht werden, daß die durch das Eindrücken der Raste 19 freiwerdende Fläche 23 in der Griffleiste 12 farblich hervorgehoben ist.

Die erfindungsgemäße Planfilmkassette weist außerdem an der Einschubseite der Lichtschutzplatte 8 hinter dem festen Rahmen 1c des Unterteils eine Schaumstoffleiste 24 mit einem Plüschbelag 25 auf, welche bei herausgezogener Platte 8 an dem Deckel 2 anliegt, wodurch eine Lichtabdichtung an der Einschubseite gewährleistet sein soll. Im Deckel 2 kann ferner eine Filmanzeige 26 vorgesehen sein, welche beispielsweise die Form nach der DE-A-2 838 058 haben kann. Schließlich ist an der Außenseite des Unterteils 1 eine Vertiefung 27 ausgeformt, welche die Möglichkeit bietet, die während des Belichtungsvorganges herausgezogene Lichtschutzplatte 8 aufzunehmen.

Im Betrieb wird nun die Kassette zunächst in eine Beladestation gebracht, die Verriegelungselemente 5 geöffnet, das Kassettenoberteil 2 angehoben und ein Film 11 in den festen Rahmen 1c eingelegt. Sodann wird durch Betätigungselemente der Beladestation das Oberteil geschlossen, so daß die Kassette dem Aufnahmegerät zugeführt werden kann. Darin wird nach dem Einsetzen der Kassette die Drucktaste 14 gedrückt und gleichzeitig die Lichtschutzplatte 8 an der Griffleiste 12 herausgezogen. Die Schaumstoffleiste 24 drückt dabei den Plüschbelag 25 an die Innenseite des Deckels 2, so daß der Einführschlitz 7 des Deckels 2 lichtdicht verschlossen ist. Selbst bei nach unten gerichteter Kassette hält der elastische Rahmen 10 den Film 11 auf dem Boden 1b des Unterteils gespannt, so daß auch bei längerer Lage der Kassette in dieser Ausrichtung der Film sich nicht nach unten durchwölbt. Nach der Belichtung wird die Lichtschutzplatte 8 wieder eingeschoben und die Schieberraste 19 betätigt. Damit wird angezeigt, daß die Kassette belichtet ist und die Platte 8 kann nicht mehr entnommen werden. Erst in der Einrichtung zum Be- und Entladen der Kassette wird diese gemäß dem oben beschriebenen Vorgang geöffnet, wobei die Schieberraste 19 wieder in ihre Ausgangslage zurückspringt.

Selbstverständlich kann die erfindungsgemäße Kassette auf einfache Weise auch manuell be- bzw. entladen werden, was bei der eingangs genannten, bekannten Kassette nicht möglich ist.

**Patentansprüche**

1. Planfilmkassette mit einem Aufnahmeteil, das einen festen Boden zur Aufnahme eines Planfilms aufweist, mit einem daran schwenkbar über ein an einer Seite vorgesehenes Scharnier angelenkten und an der gegenüberliegenden Seite verriegelbaren Deckelteil, das ein Belichtungsfenster und einen stirnseitigen Schlitz, in dem eine einen Film in der Kassette lichtdicht abdeckende Lichtschutzplatte verschiebbar ist, aufweist, mit Lichtabdichtungen zwischen Aufnahmeteil und Deckelteil, dadurch gekennzeichnet, daß an der Innenfläche des Deckelteiles (2) um das Belichtungsfenster (6) ein umlaufender, im geschlossenen Zustand der Kassette den Rand des Films (11) an den festen Boden (1b) des Aufnahmeteils (1) drückender elastischer Rahmen (10) und an dem festen Boden (1b) des Aufnahmeteiles (1) ein rechteckiger Rahmen (1c) angeordnet sind, daß letzterer die Auflagefläche des Planfilms (11) umgrenzt und im geschlossenen Zustand der Kassette den elastischen Rahmen (10) des Deckelteils (2) umgibt, und daß außerhalb der rechteckigen Rahmen (10, 1c) an den der Einschubseite für die Lichtschutzplatte (8) benachbarten bzw. gegenüberliegenden Kassettenseiten ineinandergreifende Labyrinthvertiefungen (1a) und Vorsprünge (4a) vorgesehen sind.

2. Planfilmkassette nach Anspruch 1, dadurch gekennzeichnet, daß der Rahmen (10) des Deckelteils (2) aus Schaumstoff ist.

3. Planfilmkassette nach einem der vorhergehenden Ansprüche, dadurch gekennzeichnet, daß an der Lichtschutzplatte (8) diese in ihrer wirksamen Stellung verriegelnde Verriegelungselemente (12, 14, 15, 17 bzw. 19, 21, 22) angeordnet sind.

4. Planfilmkassette nach Anspruch 3, dadurch gekennzeichnet, daß die Lichtschutzplatte (8) eine Griffleiste (12) aufweist, an der ein elastisch angeordneter Druckknopf (14) vorgesehen ist, an dem ein ein Verriegelungsglied bildender Haken (17) angeformt ist.

5. Planfilmkassette nach den Ansprüchen 3 oder 4, dadurch gekennzeichnet, daß am Aufnahmeteil (1) eine Hakenleiste (18) vorgesehen ist, hinter die der Haken (17) in der wirksamen Stellung der Lichtschutzplatte (8) eingreift.

6. Planfilmkassette nach einem der Ansprüche 3 bis 5, dadurch gekennzeichnet, daß als Verriegelungselemente an der Lichtschutzplatte (8), vorzugsweise an der Griffleiste (12), eine Schieberraste (19, 21, 22) angeordnet ist, von der ein Rasthaken (21) im betätigten Zustand in der wirksamen Stellung der Lichtschutzplatte (8) die Hakenleiste (18) im Aufnahmeteil (1) hintergreift und die eine Feder (22) umfaßt, welche den Rasthaken (21) in der eingerasteten Stellung gegen die Hakenleiste (18) drückt.

7. Planfilmkassette nach einem der vorhergehenden Ansprüche, dadurch gekennzeichnet, daß im Deckelteil (2) eine Filmanzeige eingebaut ist.

8. Planfilmkassette nach einem der vorhergehenden Ansprüche, dadurch gekennzeichnet, daß auf der Seite des stirnseitigen Schlitzes für die Lichtschutzplatte (8) an dem Deckelteil (2) eine Dichtleiste (9) befestigt ist, welche das Belichtungsfenster (6) bei in ein Aufnahmegerät eingesetzter Kassette vor Lichteinfall schützt.

9. Planfilmkassette nach einem der vorhergehenden Ansprüche, dadurch gekennzeichnet, daß an der Außenseite des Aufnahmeteils (1) eine Vertiefung (27) zur Aufnahme der Lichtschutzplatte (8) vorgesehen ist.

10. Planfilmkassette nach Anspruch 4, dadurch gekennzeichnet, daß am Deckelteil (2) eine das bessere Fassen der Griffleiste (12) ermöglichende Aussparung (13) ausgebildet ist.

## Claims

1. Plane-film cassette including a receptor part having a fixed bottom adapted to receive a plane film, with a cover part, or lid pivotally attached thereto by a hinge on one side thereof and lockable thereto on the opposite side, said cover part comprising an exposure window and a frontal slot in which slides a light-guard plate which convers and excludes light from a film inside the cassette with light-excluding seals being provided between the receptor part and the cover part, characterised by the provision on the interior surface of the cover part (2) of a continuous elastic frame (10) surrounding the exposure window (6) and, in the closed state of the cassette, pressing the fixed bottom (1b) of the receptor part (10) against the edge of the film (11), and by the provision, on the fixed bottom (1b) of the receptor part (1) of a rectangular frame (1c) which delimits the support area for the plane film (11) and which, in the closed state of the cassette, surrounds the elastic frame (10) of the cover part (2), and by the provision, externally of said rectangular frames (10, 1c), of interengaging labyrinth-recesses (1a) and projections (4a) on the cassette sides adjacent to or opposite the slide-in side for the light-guard plate (8).

2. Plane-film cassette according to claim 1, characterised in that the frame (10) of the cover part (2) is made of foam material.

3. Plane-film cassette according to any preceding claim, characterised in that locking elements (12, 14, 15, 17, or 19, 21, 22) ar arranged on the light-guard plate (8) and which lock the same in its effective position.

4. Plane-film cassette according to claim 3, characterised in that the light-guard plate (8) comprises a gripping handle (12) on which an elastically mounted press-stud (14) is provided which has an on-moulded hook portion (17) representing a locking element.

5. Plane-film cassette according to claims 3 or 4, characterised in that a latch bar (18) is arranged on the receptor part (1) behind which the hook (17) engages in the functional position of the light-guard plate (8).

6. Plane-film cassette according to any of claims 3 to 5, characterised in that a sliding hook, or detent bar (19, 21, 22) is provided by way of a locking element on the light-guard plate (8), preferably on the gripping handle (12), of which a latch-hook (21) in actuated condition, in the functional position of the light-guard plate (8), engages behind the latch bar (18) in the receptor part (1), and which comprises a spring (22) which in the engaged position applies the hook (21) to the hook bar (18).

7. Plane-film cassette according to any preceding claim, characterised in that a film display is fitted in the cover part (2).

8. Plane-film cassette according to any preceding claim, characterised in that a sealing strip (9) is secured to the cover part (2) on the side of the frontal introductory slot for the light-guard plate (8) which protects the exposure window (60) from light incidence when the cassette is fitted in a camera.

9. Plane-film cassette according to any preceding claims characterised by the provision of a recess (27) on the exterior side of the receptor part (1) for the accommodation of the light-guard plate (8).

10. Plane-film cassette according to claim 4, characterised in that the cover part (2) is provided with a recess (13) which facilitates access to and manipulation of the gripping handle (12).

**Revendications**

1. Cassette à film plan, comprenant une partie de réception, qui présente un fond rigide de réception d'un film plan, une partie formant couvercle qui est montée pivotante sur la partie de réception par une charnière prévue sur l'un des cotés, qui peut être verrouillée par le côté opposé, et que présente une fenêtre d'exposition et une fente du côté frontal dans lequel peut coulisser une plaque d'interception de la lumière recouvrant d'une manière étanche à la lumière un film dans la cassette, et des garnitures étanches à la lumière entre la partie de réception et la partie formant couvercle, caractérisée en ce qu'un cadre élastique (10) fermé sur lui-même, repoussant le bord du film (11) contre le fond rigide (1b) de la partie de réception (1) quand la cassette est fermée, est disposé sur la surface intérieure de la partie formant couvercle (2) autour de la fenêtre d'exposition (6) et un cadre rectangulaire (1c) est disposé sur le fond rigide (1b) de la partie de reception (1), en ce que ce dernier cadre délimite la surface d'appui du film plan (11) et, quand la cassette est fermée, entoure le cadre élastique (10) de la partie formant couvercle (2), et en ce que, en dehors des cadres rectangulaires (10, 1c) sont prévus, sur les côtés de la cassette adjacents et opposé au côté d'introduction de la plaque d'interception de la lumière (8), des cavités (1a) et des parties saillantes (4a) formant labyrinthe, qui s'emboîtent les unes dans les autres.

2. Cassette à film plan suivant la revendication 1, caractérisée en ce que le cadre (10) de la partie formant couvercle (2) est en matière mousse.

3. Cassette à film plan suivant l'une des revendications précédentes, caractérisée en ce que, sur la plaque d'interception de la lumière (8) sont disposés des éléments de verrouillage (12, 14, 15, 17 ou 19, 21, 22), verrouillant celle-ci en sa position active.

4. Cassette à film plan suivant la revendication 3, caractérisée en ce que la plaque d'interception de la lumière (8) présente une baguette de préhension (12), sur laquelle est prévu un bouton-poussoir (14) qui est monté élastiquement et sur lequel est formé un crochet (17) formant un organe de verrouillage.

5. Cassette à film plan suivant les revendications 3 ou 4, caractérisée en ce que, sur la partie de réception (1) est prévue une baguette formant crochet (18), derrière laquelle le crochet (17) s'accroche en la position active de la plaque d'interception de la lumière (8).

6. Cassette à film plan suivant l'une quelconque des revendications 3 à 5, caractérisée en ce que, comme élément de verrouillage sur la plaque d'interception de la lumière (8), de préférence sur la baguette de préhension (12), est monté un dispositif d'encliquetage coulissant (19, 21, 22), à partir duquel un crochet d'encliquetage (21) vient, lorsqu'il est manoeuvré, pour la position active de la plaque d'interception de la lumière (8), derrière la baguette formant crochet (18) de la partie de réception (1) , et qui comprend un ressort (22) que peut tirer ou pousser le crochet d'encliquetage (21) en la position encliquetée contre la baguette formant crochet (18).

7. Cassette à film plan suivant l'une des revendications précédentes, caractérisée en ce que dans la partie formant courvercle (2) est incorporé un dispositif indiquant la présence d'une pellicule.

8. Cassette à film plan suivant l'une des revendications précédentes, caractérisée en ce que sur le côté de la fente se trouvant du côté frontal et qui est destinée à la plaque d'interception de la lumière (8) est fixée, sur la partie formant couvercle (2), une baguette d'étanchéité (9), qui protège la fenêtre d'exposition (6) de toute entrée de lumière lorsque la cassette est introduite dans l'appareil de prise de vue.

9. Cassette à film plan suivant l'une des revendications précédentes, caractérisée en ce que, sur le côté extérieur de la partie de réception (1) est prévue une cavité (27) de réception de la plaque d'interception de la lumière (8).

10. Cassette à film plan suivant la revendication 4, caractérisée en ce que, sur la partie formant couvercle (2) est ménagée une encoche (13) facilitant la prise de la baguette de préhension (12).

Fig.1

Fig.2

Fig.3

Fig.4a

Fig.4b

## Fig. 5